# EUROPEAN PATENT APPLICATION

(11) **EP 2 508 318 A1**
(43) Date of publication of application: **10.10.2012**
(21) Application number: 11161475.6
(22) Date of filing: 07.04.2011
(51) Int. Cl.: B29B 11/14, B65D 23/02, B65D 83/00, B65D 25/14, B65D 77/06, B29C 35/08, B29C 49/22, B29C 49/06, B29C 47/06, B29B 11/08

(54) **Preform for blow-moulding a dispensing bag-in-container, process for producing a dispensing bag-in-container and bag-in-container.**

(71) Applicant: Anheuser-Busch InBev NV, 1000 Brussel (BE)
(72) Inventor: Peirsman, Daniel, 1000 Brussel (BE); Van Hove, Sarah, 1000 Brussel (BE)
(74) Representative: BiiP cvba

(57) **Abstract**

The present invention concerns a preform (1) for blow-moulding a dispensing bag-in-container, said preform comprising an inner layer (1B) and an outer layer (1A), wherein said preform (1) forms a two layer container (2) upon blow-moulding, and wherein the obtained inner layer (2B) of said container releases from the obtained outer layer (2A) upon introduction of a pressurized gas at a point of interface (24) between said two layers; characterized in that,
the inner layer (1B) includes at least one additive in a concentration allowing heating the inner layer (1B) at a higher rate, dTᵢₙ / dt, than the outer layer (1A), dTₒᵤₜ / dt, upon heating the preform in a radiation oven emitting in a given radiation wavelength spectrum.
The present invention also concerns a process for producing a dispensing bag-in-container and a bag-in-container made by the process.

## Description

### Field of the Invention

The present invention relates in general to further improvements in dispensing bag-in containers and, in particular, to integrally blow-moulded bag-in-containers. It also relates to a method for producing bag-in-containers and, in particular, to preforms used for their production.

### Background of the Invention

Bag-in-containers, also referred to as bag-in-bottles or bag-in-boxes depending on the geometry of the outer vessel, all terms considered herein as being comprised within the meaning of the term bag-in-container, are a family of liquid dispensing packaging consisting of an outer container comprising an opening to the atmosphere - the mouth - and which contains a collapsible inner bag joined together to said container and opening to the atmosphere at the region of said mouth. The system must comprise at least one vent fluidly connecting the atmosphere to the region between the inner bag and the outer container in order to control the pressure in said region to squeeze the inner bag and thus dispense the liquid contained therein.

Recent developments in the production of bag-in-containers focused on "integrally blow-moulded bag-in-containers", produced by blow-moulding a polymeric multilayer preform into a container comprising an inner layer and an outer layer, such that the adhesion between the inner and the outer layer of the thus produced container is sufficiently weak to readily delaminate upon introduction of a gas at the interface. The "inner layer" and "outer layer" may each consist of a single layer or a plurality of layers, but can in any case readily be identified, at least upon delamination. Said technology involves many challenges and many alternative solutions were proposed. Integrally blow-moulded bag-in-containers cannot be confused with containers provided with a removable liner, which function is not to drive the dispensing of liquid out of the container, but simply to ensure hygienic conditions when re-using the lined container. Indeed, the inner liner can be removed from the interior of the container when it is empty. Such removable liners are not designed to collapse such as to contain the liquid and drive the flow of liquid out of the container in a controlled manner. An example of such container with removable liner is disclosed e.g., in WO91/08099.

The multilayer preform may be extruded or injection moulded (cf. US-A-6,238,201, JP-A-10128833, JP-A-11010719, JP-A-9208688, US-A-6,649,121). When the former method is advantageous in terms of productivity, the latter is preferable when wall-thickness accuracy or specific neck geometries are required, typically in containers for dispensing beverage.

The formation of the vents fluidly connecting the space or interface between inner bag and outer container to the atmosphere remains a critical step in integrally blow-moulded bag-in-containers and several solutions were proposed in e.g. US-A-5,301,838, US-A-5,407,629, JP-A-5213373, JP-A-8001761, EP-A-1,356,915, US-A-6,649,121, JP-A-10180853. A preferred solution is, however, disclosed in W02008/129012. Vents geometry strongly depends on the means used for creating a pressure difference between the interior of the bag (containing the liquid) and the exterior of the bag (i.e., in the space or interface between inner and outer layers of the container). Said means may be simply gravity driven, by positioning the inlet of the dispensing duct below the level of liquid like in old oak barrels for wine or in soap dispensers in public washrooms, but more advantageously, they comprise either means for increasing the pressure outside the inner bag or, alternatively, decreasing the pressure inside the inner bag, such as with a pump. If the pressure is being increased outside the bag, such dispensing system is referred to herein as a "pressure dispensing" system, whilst a "vacuum dispensing" system refers to systems where the pressure inside the container is decreased. A pump may be used in both pressure and vacuum dispensing systems. For pressure dispensing systems, however, other means can be used such as pressurized gas stored in a pressure cartridge and/or adsorbed on a carrier. Said means for storing pressurized gas may be provided either in the container or in the appliance. If a source of pressurized gas external to the container is used, the dispensing appliance shall require at least a second, gas tube to be connected to a corresponding aperture in the closure or container body to bring said source in fluid communication with the interior of the container. In pressure driven dispensing bag-in-containers, the vents must be suitable for receiving a pressurized gas duct connected to a source of pressurized gas, as disclosed in W02008/129012. In gravity dispensing systems as well as vacuum dispensing systems, the vents are there solely to balance the pressure between inner and outer layer with ambient upon dispensing, and concomitant collapse of the inner bag. For this reason, the vents in such systems, unlike with pressure driven systems, must be in fluid communication with ambient and can be located anywhere in the body of the container or at the neck thereof, but clear from any sealing member of a closure or other fixture.

Another problem with integrally blow-moulded bag-in-containers is the choice of materials for the inner and outer layers which must be selected according to strict criteria of compatibility in terms of processing on the one hand and, on the other hand, of incompatibility in terms of adhesion. These criteria are sometimes difficult to fulfil in combination. This problem does not arise in the field of blow-moulding co-layered plastic containers, wherein the adhesion between layers is maximized in order to avoid delamination, because best adhesion is obtained with similar materials, which generally have similar thermal properties. Consequently, finding materials being compatible in terms of processing and adhesion as for the fabrication of co-layered containers is generally less problematic than finding materials being compatible in terms of processing and incompatible in terms of adhesion as for the fabrication of bag-in-containers.

Addressing processing compatibility, EP-A-1,356,915 and US-A-6,649,121 proposed that the melting temperature of the outer layer should be higher than the one of the inner layer in order to allow production of integral preforms by injection moulding the outer layer first, followed by the injecting thereover the inner layer. Examples of materials for the outer layer disclosed in EP-A-1,356,915 and US-A-6,649,121 include PET and EVOH, whilst polyethylene is given as an example for the inner layer. Though this materials selection could result advantageous for the injection moulding production of the preforms, it is far from optimal for the blow-moulding step since polyethylene and PET are characterized by quite different blow-moulding temperatures. Again, in US-A-6,238,201 a method is described including co-extruding a two layer parison followed by blow-moulding said parison into a bag-in-container wherein the outer layer preferably comprises an olefin and the inner layer an amorphous polyamide (i.e;, having no melting temperature).

Concerning the materials choice for a weak interfacial adhesion required for ensuring proper delamination of the inner layer from the outer layer upon use, mention is made in JP-A-2005047172 of "mutually non-adhesive synthetic resins." In the review of the background art in US-A-5,921,416 the use of release layers interleafed between the inner and outer layers, forming three- or five-layer structures in mentioned. An example of such layer is described in US-A-5,301,838 which discloses a complex five layer preform comprising three PET layers interleafed by two thin layers of a material selected from the group of EVOH, PP, PE, PA6. Here again, beside the complexity involved with the production of such preforms, substantial differences in blow-moulding temperatures characterize these different materials.

Alternatively and surprisingly it has been described in W02008/129016 that excellent delamination results between the inner and outer layers can be obtained also with preforms wherein both inner and outer layers consist of the same material. Similar results were obtained both with preform assemblies as well as with integral preforms. In case of integral, over-moulded preforms, it is generally believed that improved results are obtained with semi-crystalline polymers.

The same polymer is considered in contact on either side of the interface between the inner and outer layers in the following cases:
- Inner and outer layers consist of the same material (e.g., PETᵢₙₙₑᵣ-PETₒᵤₜₑᵣ, regardless of the specific grade of each PET); or
- The inner and outer layers consist of a blend or copolymer having at least one polymer in common, provided said polymer in common is at the interface, whilst the differing polymer is substantially absent or in minor amounts at said interface (e.g., (0.85 PET + 0.15 PA6)ᵢₙₙₑᵣ (0.8 PET + 0.2 PE) outer.

The presence in a layer of low amounts additives is not regarded as rendering the material different.

Although in case the same material is used for the inner and outer layers, there is no difference in blow-moulding temperature between the layers, the heating rate of the two layers can be substantially different due to the wide difference in thicknesses between the inner and outer layers. Moreover, the inner layer is sheltered by the thick, outer layer from the IR-radiation of the IR-oven usually used to bring the preform to blow-moulding temperature. It follows that even for materials having little or no difference in blow-moulding temperatures, there can be a problem to heat a two-layer preform such that both layers reach their processing temperatures simultaneously.

In order to overcome the problem of different blow-moulding temperatures or heating rates of the materials forming the inner and outer layers of blow-moulded multilayer containers, WO 2008/129013 proposes to include at least one energy absorbing additive allowing both inner and outer layers to reach their respective blow-moulding temperatures substantially simultaneously upon heating the preform in a single oven.

Still another dual problem with integrally blow-moulded bag-in-containers are the highly different structural requirements for, on the one hand, the inner bag, which must be sufficiently flexible and tear resistant to allow proper collapse of the bag upon dispensing and, on the other hand, the outer container which must be stiff and strong to provide structural support and withstanding pressure built up in the container during dispensing. These radically opposed structural requirements for the inner and outer layers, narrow the blow-moulding processing window to a large extent as crystallisation of the inner layer is to be controlled such as to reduce brittleness and to increase flexibility thereof, whereas the crystallinity of the outer layer must be controlled to enhance structural (mechanical) strength. Crystallinity is controlled by both thermal and shear stress conditions during the blowmoulding process, the level of shear stresses being dependent on the temperature which controls the relaxation time of the polymeric materials. Furthermore, no solution is available to date for the manufacturing of integral bag-in-containers having an outer layer made of a polymer (e.g., PVC with T_{bm} ≈ 90°C) of blow moulding temperature, T_{bm}, lower than the inner layer (e.g., PET with T_{bm} ≈ 105°C), since radiation ovens intrinsically heat more the outer layer than the inner layer (cf. Beer-Lambert law).

It follows from the foregoing that there remains a need in the art for solutions for producing integrally blow-moulded bag-in-containers with inner and outer layers displaying the respective required properties and yielding a low adhesion at their interface to allow controlled collapse of the inner bag upon dispensing for a larger variety of materials and, in particular, when inner and outer layers are made of the same material, or when the inner layer has a blow moulding temperature higher than the outer layer.

### Summary of the Invention

The present invention is defined in the appended independent claims. Preferred embodiments are disclosed in the dependent claims. In particular, the present invention relates to a preform for blow-moulding a dispensing bag-in-container, said preform comprising an inner layer and an outer layer, wherein said preform forms a two layer container upon blow-moulding, and wherein the obtained inner layer of said container releases from the obtained outer layer upon introduction of a pressurized gas at a point of interface between said two layers; characterized in that,
the inner layer includes at least one additive in a concentration allowing heating the inner layer at a higher rate, dTᵢₙ / dt, than the outer layer, dTₒᵤₜ / dt, upon heating the preform in a radiation oven emitting in a given radiation wavelength spectrum.

In order to shorten the heating time of the preform prior to blow-moulding, it is preferred that the type and amount of additives in at least the inner layer of said preform are such as to allow both inner and outer layers to reach their desired blow-moulding temperatures, T_{bm,in} and T_{bm,out}, substantially simultaneously upon heating the preform in said radiation oven.

The inner and outer layers of the preform of the present invention may be made of different materials or; alternatively and preferably comprise the same polymer material, to enhance recyclability of a mass produced product and to simplify materials stock management associated with the production of the preforms. In particular, the inner and outer layers each comprise a semicrystalline material, preferably selected from PET, PEN, PTT, PA, PP, PE, HDPE, EVOH, PGAc, PLA, and copolymers thereof.

The at least one additive present in at least the inner layer is preferably selected from the group of energy absorbing additives and colorants characterized by an absorption spectrum having peaks in the wavelength range.comprised between 700 and 20,000 nm, preferably, between 1,000 and 15,000 nm, more preferably between 5,000 and 12,000 nm, most prefetably between.6,000 and 10,000 nm. In particular, the energy absorbing additives may be selected from one or several of carbon black, graphite, diamond dust, diazonium salts, sulphonium salts, sulphoxonium salts, iodonium salts, and metal powders such as titanium, aluminium, vanadium, and the like.

The present invention also concerns a process for producing a dispensing bag-in-container comprising the following steps:
- providing a radiation oven emitting in a given spectrum of radiation;
- providing a preform having an inner layer and an outer layer, wherein said preform forms a two layer container upon blow-moulding, and wherein the obtained inner layer of said container releases from the obtained outer layer upon introduction of a gas at a point of interface between said two layers, wherein the inner layer of the preform includes at least one additive allowing heating the inner layer at a higher rate, dTᵢₙ / dt, than the outer layer, dTₒᵤₜ / dt, upon irradiating the preform in said radiation oven;

- heating the inner and outer layers of said preform to their respective blow-moulding temperatures, T_{bm,in}, T_{bm,out}, in said radiation oven;
- transferring the thus heated preform to a blowmoulding tool,
- blow-moulding the thus heated preform to form a bag-in-container.

Any of the preforms discussed above can advantageously be used in the process of the present invention. By optimizing the amounts of heat additives in the inner and, optionally, the outer layers to the particular radiation wavelength spectrum emitted by the lamps of the radiation oven, it is possible that both the inner layer and the outer layer reach their desired blow-moulding temperatures, T_{bm,in}, T_{bm,out}, substantially simultaneously upon heating the preform in said radiation oven, which is of course highly advantageous in terms of processing time and energy management.

For a better control of the (weak) adhesion between inner and outer layers of an integrally blow-moulded container according to the present invention it is preferred that the blowmoulding temperature, T_{bm,in}, of the inner layer is higher than the one, T_{bm,out}, of the outer layer.

Any type of radiation oven can be used in the frame of the present invention and are available off the shelves on the market. For example, an infrared oven emitting radiations at least in a wavelength range.comprised between 700 and 20,000 nm, preferably, between 1,000 and 15,000 nm, more preferably between 5,000 and 12,000 nm, most prefetably between.6,000 and 10,000 nm, is particularly suitable for the present process.

The present invention also concerns a bag-in-container made by a process as defined above. It is characterized by a flexibility of the inner bag and a weak interfacial strength between inner and outer layers, which contribute to a reliable and reproducible smooth dispensing of a liquid contained in said inner bag.

### Brief description of the Drawings

Figure 1 is a schematic cross-sectional representation of (a) a first and (b) second embodiments of a preform according to the present invention and (c) a bag-in-container obtained after blow-moulding the foregoing preforms.
Figure 2: is a schematic representation of the temperature profile as a function of time of the inner and outer layers of a preform according to the present invention (a) in the radiation oven and (b) throughout the blow-moulding process..
Figure 3: schematic representation of (a) the transmission of a radiation through a first, outer layer and a second, inner layer, and (b) the temperature profile at a given time across the inner and outer layers.

### Detailed description of a preferred embodiment

In the description, the following definitions have been applied for:
- "Semicrystalline polymer" means a polymer exhibiting both amorphous and crystalline regions when cooled to an equilibrium state below melting point;
- "Crystallinity" means the volume fraction of the semicrystalline polymer that is packed in the crystalline state. Crystallinity of a polymer can be determined by different methods well known to the person skilled in the art including, measurement of the area under the endothermic melting peak in a DSC graph, by wide angle X-ray diffraction, by micro-hardness measurement methods, by Raman spectroscopy, and the like.
- "Heating rate" means the change (increase) in temperature over time (dT / dt), wherein T is the temperature and t is the time.

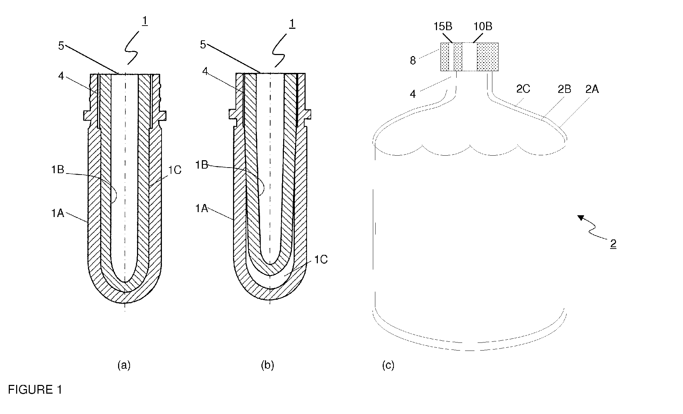

Figures 1(a)&(b) illustrate two embodiments of a preform 1 according to the present invention and Figure 1(c) shows an integrally blow-moulded bag-on-container 2 obtainable by blowmoulding such preforms 1. The preforms 1 illustrated in Figures 1(a)&(b) comprise an inner layer (1B) and an outer layer (1A) both having a tube like body with a closed end and a neck region defining a mouth 5. The inner layer (1 B) and outer layers (1A) are joined at least at the level of the neck region by an interface (shown on the right hand side). The region 1C between inner and outer layers (1 B) and (1A) may either consist of an interface wherein the two layers are substantially contacting each other as illustrated in Figure 1(a), or comprise a gap in fluid communication with at least one vent 4 opening to the atmosphere as illustrated in Figure 1 (b).

As discussed in the introductory section, many vent geometries have been disclosed, and it is not particularly critical to the present invention which geometry is selected. It is preferred, however, that the vent 4 be located adjacent to, and oriented coaxially with said preform's mouth 5 as illustrated in Figures 1(a)&(b). More preferably, the vents have the shape of a wedge with the broad side at the level of the opening thereof and getting thinner as it penetrates deeper into the vessel, until the two layers meet to form an interface 1C at least at the level of the neck region. This geometry allows for a more efficient and reproducible delamination of the inner bag upon use of the bag-in-container. The container may comprise one or several vents evenly distributed around the lip of the bag-in-container's mouth. Several vents are advantageous as they permit the interface of the inner and outer layers 2B and 2A of the bag-in-container 2 to release more evenly upon blowing pressurized gas through said vents. Preferably, the preform comprises two vents 4 opening at the vessel's mouth lip at substantially diametrically opposed positions. More preferably, three, and most preferably, at least four vents open at regular intervals of the mouth lip.

According to general practice, a multiple layer preform is produced by separately injection moulding the inner layer (1B) and the outer layer (1A) and subsequently assembling the multiple layer preform 1 by fitting the inner layer (1 B) into the outer layer (1 A). This solution, referred to as "preform assembly," allows for greater freedom in the design of the neck and vents. Alternatively, the preform can be obtained by injection moulding one layer on top of the other. The latter embodiment referred to as 'integral preform" is advantageous over the preform assembly in that it comprises no assembly step and one production station only is required for the preform fabrication. On the other hand, the design of the vents in particular is restricted by this process and adhesion issues between inner and outer layers (1 A, 1 B) arise already at the stage of preform production..

A preform for the production of a typical 8 liter bag-in-container for dispensing beer typically has an outer layer (1A) of thickness comprised between 2.5 and 6 mm, preferably between 3.0 and 5.0 mm, most preferably between 3.5 and 4.5 mm, whilst the inner layer (1 B) generally has a thickness comprised between 1.0 and 4.0 mm, preferably between 1.5 and 3.5 mm, most preferably between 2.0 and 3.0 mm.

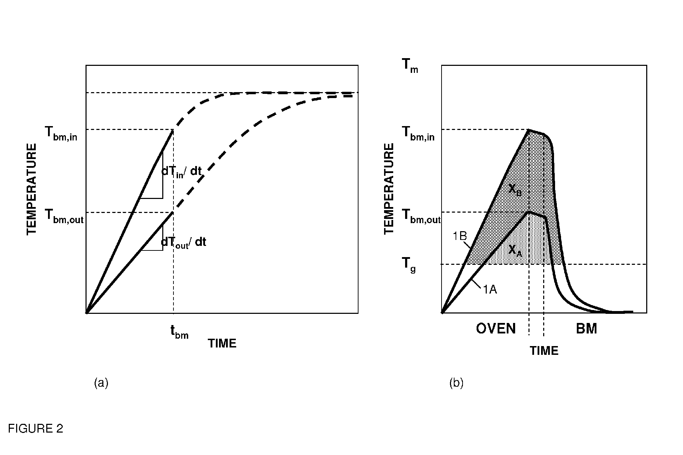

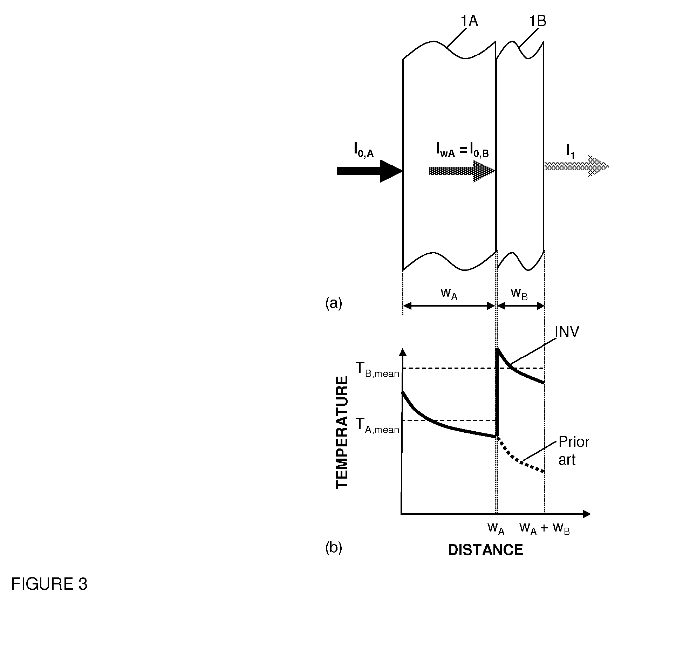

Preferred materials for the inner and outer layers (1 B) and (1 A) of the preform and bag-in-container of the present invention are pairs of the same or different, preferably semicrystalline, materials selected from the group of polyesters like PET, PEN, PTT, PTN; polyamides like PA6, PA66, PA11, PA12; polyolefins like PE, PP; EVOH; biodegradable polymers like polyglycol acetate (PGAc), polylactic acid (PLA); and copolymers and blends thereof. The preform (1) must be heated before blow-moulding to blow-moulding temperature, T_{bm}, which for semi-crystalline polymers is comprised between glass transition temperature, Tg, and melting temperature, Tₘ, of each layer (1A, 1 B). According to the present invention, at least the inner layer (1B) comprises at least one additive in a concentration allowing heating the inner layer (1B) at a higher rate, dTᵢₙ / dt, than the outer layer (1A), dTₒᵤₜ / dt, upon heating the preform in a radiation oven emitting in a given radiation wavelength spectrum. In the following, such additives are sometimes referred to as "heat additives" when a distinction from other types of additives is considered necessary. Of course, it is also possible that both layers comprise energy absorbing additives of different nature and/or in different amounts, as long as the compositions of the inner layer (1 B) and outer layer (1 A) are such as to allow heating the inner layer (1B) at a higher rate than the outer layer (1A) when heating the preform in said radiation oven. The right amount of additives depends on a number of parameters such as the material and thickness of the inner and outer layers (1A, 1B), the type of heat additive used, the type and power of radiations irradiated onto the preform and the like. For a given oven, the heating rates, dT / dt, of the inner and outer layers (1 A, 1 B) can easily be determined by means well known to the person skilled in the art. For instance, a first and a second thermocouples can be applied to the inner and outer layers (1A, 1 B), either bonded to a surface thereof, or inserted into a small hole to measure a mean temperature, Tₘₑₐₙ, across the thickness of the layers, as illustrated in Figure 3(b). The thermocouples can be connected to a printer or a data acquisition system to obtain heating curves as illustrated in Figure 2(a). Alternatively, quite performant IR imaging systems can be used to get a picture of the temperature distribution through the preform at different residence times in the oven. The skilled person is therefore in a position to find the proper compositions of the inner and outer layers and determine without ambiguity whether a preform is according to the present invention with a very few trials.

The heat additives that can be used in the present invention may be any compound that selectively absorbs radiation in the wavelength region comprised between 700 and 20,000 nm, preferably, between 1,000 and 15,000 nm, more preferably between 5,000 and 12,000 nm, most prefetably between 6,000 and 10,000 nm. The heat additives should preferably be sufficiently fine not to be visible to the naked eye and may comprise energy absorbing additives and colorants. Examples of energy absorbing additives include but are not limited to carbon black, graphite, diamond dust, diazonium salts, sulphonium salts (e.g., triphenylsulphonium bromide), sulfoxonium salts, odonium salts, metal powder such as Al, V, Ti, etc.

The amount of heat additive present in a layer depends on the additive itself and on the polymers used for the inner and outer layer (1B, 1A), as well as their thicknesses, and the wavelength of the radiation. Generally speaking assuming the outer layer (1A) is devoid of heat additive, the heat additives are preferably present in the inner layer (1 B) in an amount comprised between 0.05 and 10 wt.% wirh respect to the total weight of the inner layer (1 B), preferably, between 0.1 and 5 wt.%, more preferably between 0.2 and 3 wt.%, most preferably between 0.5 and 2 wt.%. If the outer layer (1 A) comprises heat additives, the above ranges shall apply to the difference in concentration between inner and outer layer, ΔC = Cᵢₙ - Cₒᵤₜ, wherein c refers to the heat additive concentration in wt.%, and the subscripts in and out to the inner and outer layers, respectively. If the heat additives are present in too large amounts, they may impair stretchability of the layers and if the additives are present in too small amounts, the desired higher heating rate of the inner layer (1 B), dTᵢₙ / dt> dTₒᵤₜ / dt, may not be fulfilled.

The two layers (1B) and (1A) of the preform may be connected by an interface 1C throughout substantially the whole inner surface of the outer layer (1A) and outer surface of the inner layer (1B). Such preforms, as illustrated in Figure 1(a) can be an integral preform, but also a preform assembly with inner preform element fitting snugly into the outer preform element. Inversely, they may be separated over a substantial area of the preform's body by a gap (1C) containing air and which is in fluid communication with at least one interface vent (4) as illustrated in Figure 1 (b). The latter embodiment is easier to realize when using a preform assembly designed such that the inner preform element is firmly fixed to the outer preform element at the neck region and a substantial gap (1 C) may thus be formed between inner and outer layers (1 B) and (1 A).

The preform of the present invention is placed into an radiation oven, preferably a infrared oven, more preferably with quartz or ceramic lamps, optionally comprising a coating. All infrared sources emit not a single wavelength but a range of wavelengths. The peak wavelength emitted is dictated by the surface temperature of the emitter which can easily be controlled using closed loop or open loop control. For preheating a polymeric preform prior to blow-moulding, an infrared oven may conveniently be used, emitting in a wavelength range comprised between 700 nm and 20,000 nm, preferably between 1000 and 12,000 nm, more preferably between 2000 and 5000 nm. Infrared ovens suitable for heating a preform prior to blowmoulding can be found easily on the market. For example, the company Lonhon (CN) offers a range of blowmoulding apparatuses with IR-oven and blowmoulding tool. The radiation emitting sources, e.g., quartz lamps, are located outside of the preform 1 resulting in the inner layer (1 B) being exposed to a radiation of lower intensity than the outer layer (1A) because of the partial absorption of the radiation by the outer layer (1A) (cf. Figure 3(a)). The absorption of a radiation travelling through a medium can be described by the Beer-Lambert law. With a preform according to the present invention, however, the inner layer is heated at a heating rate, dTᵢₙ / dt, higher than the outer layer, dTₒᵤₜ / dt, under the effect of the heat additives included in the inner layer (1 B). In other words, the outer layer (1 B), exposed to an incident radiation of intensity, l_{0,A}, interacts less therewith than the inner layer exposed to an incident radiation of intensity, l_{0,B} < l_{0,A}, because the (excess) heat additives present in the inner layer (1 B) absorb more energy of the radiation than the polymeric materials of the inner and outer layers alone (i.e., devoid of heat additives). It results, as illustrated in Figure 3(b) that, after a given residence time in the oven, the mean temperature, T_{B,mean}, of the inner layer (1 B) of a preform according to the present invention is higher than the mean temperature, T_{A,mean}, of the outer layer (1A), which is quite the opposite of what happens with the state of the art preforms as illustrated with dotted line in Figure 3(b). Once the inner and outer layers (1 A, 1 B) have reached their respective blow-moulding temperature, T_{bm}, after a heating time, t_{bm}, in the radiation oven, the heated preform is transferred into the blowmoulding tool. This allows to use a material for the outer layer (1A) having a blow moulding temperature lower than the material of the inner layer, which has not been possible to date.

Upon blow-moulding a thus heated preform according to the present invention, a bag-in-container 2 is obtained having an outer container (2A) formed in the tool cavity out of the outer layer (1 A) of the preform and an inner bag (2B) formed out of the inner layer (1 B) of the preform. The outer container (2A) provides mechanical strength and structure, while the inner bag (2B) is flexible to enhance collapsibility upon dispensing of a fluid contained in the inner bag 2B upon use of the bag-in-container 2.

It has been surprisingly observed that the adhesion between inner and outer layers 2A, 2B of a thus formed bag-in-container (2) was greatly decreased and collapse of the inner bag (2B) was smoother when the heating rate, dTᵢₙ / dt, of the inner layer (1 B) of a preform (1) was higher than the one of the outer layer, dTₒᵤₜ / dt. This phenomenon was observed particularly in cases where the inner and outer layers (1 A), (1 B) of the preform (1) were made of the same material, which is certainly the most difficult configuration to produce integrally blow-moulded bag-in-containers, but which is also quite attractive because it greatly eases the recycling of a mass consumption product, and it simplifies storage management of materials for the manufacturing of preforms. It is believed, without being bound by any theory, that the reduced adhesion between inner and outer layers (2A, 2B) of a bag-in-container (2) according to the present invention may be explained by the differing surface structures of the inner and outer layers (2A, 2B) at the interface and, in particular, the crystallinity and crystals configurations, resulting in differing surface energies across the interface.

The preforms may be produced by extrusion or injection moulding. It is preferred to produce the preforms by injection moulding as this technique provides a better control of the geometry than extrusion. In both cases, the polymer of the inner and outer layers is transported by a screw to a die or a tool in a molten state or, for purely amorphous polymers, in a flowing state. The melt is severely sheared upon flowing through a die or through the channels leading to an injection moulding tool, which is known to have a great influence on crystallization. Once out of the die or in the tool, the melt is rapidly cooled and solidifies. During cooling, semi-crystalline polymers undergo a certain degree of crystallization depending on the cooling rate in the range between their melting temperature and glass transition temperature. Because of the severe shear undergone during the process and the generally rapid cooling —almost quenching— of the polymer, the inner and outer layers (1A, 1 B) of the preforms generally present internal stresses and off-thermodynamic equilibrium crystal configuration. A high crystallinity of the preform layers is generally considered as hindering the stretchability of the layers during blow-moulding and should therefore be avoided.

Before blow-moulding, the preforms are heated in a radiation oven such that each layer reaches a blow-moulding temperature, T_{bm,i}, comprised between their glass transition temperature, T_{g,i}, and melting temperature, T_{m,i}, i.e., T_{g,i} < T_{bm,i} < T_{m,i}, wherein the subscript i refers to the inner or outer layer (1A, 1 B). During this heating process, the polymers of the inner and outer layers undergo stress relaxation and some crystallization.

The preform, with both inner and outer layers heated at a temperature above their T_{g}, is then rapidly transferred from the oven to the blow-moulding tool, to which it is clamped at the neck region. Heated air is injected through the mouth 5 into the softened inner layer (1B), which is stretched, pushing ahead the outer layer (1A), until the latter reaches the wall of the tool cavity, where both layers are cooled close to or even below therir respective Tg prior to extraction. In most applications, the preform is stretched biaxially, sometimes assisted by a piston driven down into the parison to stretch it in the longitudinal direction prior to blowing gas to stretch the preform in the radial direction. Biaxial stretching has the advantage of yielding an outer layer with higher stiffness. During this process, the two layers undergo severe shear stresses, which enhance crystallization (cf. e.g., Guo, J., and Nahr, K., Adv. Polym. Technol., 21, 214 (2002)). The inner layer is strained more than the outer layer, since the inner layer forms contact with the outer layer when the latter reaches the tool wall, and at this stage the latter has become substantially thinner. The outer layer (2A) cools more rapidly than the inner layer (2B), because it contacts the cooled tool wall. At any stage of the whole process, including preform manufacturing for integral preforms, wherein the layers are at a temperature above Tg, there is a risk of creating a bond between the inner and outer layers with an interfacial strength too high for the use of dispensing bag-in-containers. To date, it still remains a challenge to blow-mould a dispensing bag-in-container 2 out of a two layer preform (1) with the required weak interfacial bond between inner and outer layers (2A, 2B), in particular in case both layers comprise the same polymer. Large amounts of release coatings are often applied between inner and outer layers of the preform, which are detrimental to the economics of the product and often comprise fluorinated components not always compatible with food regulations. Furthermore, the outer container (2A) must be rigid to provide the necessary structural resistance and the inner bag (2B) must be sufficiently flexible to allow proper collapse thereof upon dispensing.

It has now surprisingly been found that heating the inner layer (1 B) of the preform 1 at a higher rate than the outer layer (1A) modified the polymers properties sufficiently to yield a bag-in container with easily and controllably collapsible inner bag (2B) due to a combination of lower adhesion between inner and outer layers (2A, 2B), and to a high flexibility of the inner bag (2B). The differences in materials configurations at the interface between inner and outer layer (2A, 2B) of a bag-in-container according to the present invention is due to the differing thermal cycle undergone by both layers (2A, 2B) as well as on the magnitude of the shear stresses undergone by each layer during the blow moulding process. Figure 2(b) schematically illustrates the temperature profiles of the inner (1 A) and outer (1 B) layers as the preform is heated in the oven, transferred to the blow-moulding tool, undergoing a slight cooling, and blow-moulded to form a bag-in-container (2) (indicated by "BM" in the axis) where the preform is stretched and cooled rapidly. Note that the axes are not to scale and are not linear, some sections being expanded to the detriment of others to clarify the Figure.

Any stress relaxation and crystallization substantially stops when the temperature of a layer is below Tg. It can be seen that the thermal histories of the two layers are quite different, which invariably has an influence on crystallization and stress relaxation of each of them, as represented by the shaded areas, X_{A}, X_{B}, under the curves (1 A), (1 B) of Figure 2(b). The high shear stresses induced in both layers during blow-moulding while cooling at high rate strongly affects the crystallinity, crystal configuration, and internal stresses build up to such an extent that modelling is quite complex and falls out of the scope of the present description. Without being bound by any theory, it is believed that the good results observed with preforms and bag-in containers according to the present invention result from a crystalline structure of the inner and outer layers 2A, 2B, at their interface 2C, differing sufficiently from one another as to yield only a weak bond between the two layers. As the inner layer (1 B) is stretched at a higher temperature than the outer layer (1A), the magnitude of the shear forces in the former is lower than in the latter, resulting in a higher crystallinity in the outer layer (2A) of the bag-in-container than in the inner layer (2B). This result is agreeable from a mechanical point of view since the outer layer confers the structural integrity to the system whilst the inner layer must remain flexible. An overview of what is believed to represent the main factors influencing the crystallinity of the inner and outer layers after blow moulding is reviewed below.
- the outer container (2A) stores more internal stresses than the inner bag (2B), as the structure of the former is frozen in a configuration (strained chains, deformed crystals) quite away from thermodynamic balance, which increases its mechanical properties, rendering it fit for its structural function in the bag-in-container (although care must be taken that no warping occurs upon stress relaxation); furthermore the area X_{A} under the time-tmeperature curve illustrated in Figure 2(b) is quite reduced, affording little energy and time to the outer layer to reach its thermodynamic configuration;
- During blow-moulding, the inner layer is at a higher temperature and for a longer time than the outer layer, which allows to stretch it more than the outer layer whilst maintaining the shear stresses in the inner layer at a lower level than in the outer layer since relaxation time decreases with higher temperature; this results in a lower amount of shear induced crystallinity in the inner layer 2B than in the outer layer (2A);
- The cooling rate of the inner layer (1 B), is still sufficiently high to prevent formation of large crystals which would be detrimental to its flexibility and transparency, if the latter is an issue;
- The surfaces in contact at the interface (2C) between inner bag (2B) and outer container (2A) have a different surface tension due to substantially differing crystals configurations, yielding a poor adhesion between them, thus enhancing debonding of the inner bag (2B) from the outer container (2A) upon dispensing. This is certainly true when the inner and outer layers (2A, 2B) are made of different materials, but it surprisingly also applies to the cases wherein the two layers comprise the same material.

It is believed that including at least one additive allowing heating of the inner layer (1B) at a higher temperature rate than the outer layer (1A) upon heating the preform in a radiation oven expands the pressure-time-temperature window for the blow-moulding process in directions never explored before, resulting in easier processing and reduced failure rates of the the thus produced bag-in-containers.

A bag-in-container (2) of the present invention can thus be obtained by providing a preform as described above, heating the inner layer (1 B) at a higher rate than the outer layer (1A) until they reach their respective desired blow-moulding temperatures; T_{bm}, transferring the thus heated preform to a blow-moulding tool and fixing it at the level of the neck region with fixing means. This is followed by blow-moulding the thus heated preform to form a bag-in-container. The inner and outer layers (2A, 2B) of the thus obtained bag-in-container are connected to one another by an interface (2C) over substantially the whole of the inner surface of the outer layer (2A). Said interface (2C) is in fluid communication with the atmosphere through the vents (4). Advantageously, the vents were present in the preform prior to blow-moulding, preferably at the neck region which is not strained during blow-moulding and the vents can thus maintain their original geometry through the blow-moulding process.

It is essential that the interface (2C) between inner and outer layers (2A, 2B) releases in a consistent and reproducible manner upon creating a pressure gradient across the inner bag wall (2B). In particular, for pressure dispensing bag-in-containers, the pressure gradient is created by increasing the pressure in the region between inner bag (2B) and outer container (2A) by, e.g., blowing pressurized gas through the vents. For vacuum and gravity dispensing bag-in-containers, the pressure gradient is created by reducing the pressure inside the bag, and bringing the space between inner and outer layers in contact with a source of higher pressure, such as for example simply with ambient. The success of said bag release operation depends on a number of parameters, in particular, on the interfacial adhesive strength, the number, geometry, and distribution of the vents and, for pressure dispensing units, on the pressure of the gas injected. The interfacial strength is of course a key issue and can be modulated by the choice of the materials for the inner and outer layers (1 B) and (1A), and by the process parameters during blow-moulding. As explained above the pressure-time-temperature window illustrated schematically in Figure 2(b) yields excellent results in terms of interfacial strength. The exact parameters used of course greatly depend on the materials selected for the inner and outer layers (1B) and (1A), but the optimization of the process parameters falls within the competence and practice of a person skilled in the art.

A container (2) as depicted in Figure 1(c), after filling with a liquid, such as a beverage like a soda or beer, is closed with a closure (8) applied to the mouth thereof. The closure (8) must comprise a first dispensing opening (10B) suitable for bringing in fluid communication the interior of the inner bag (2B) containing the liquid with ambient. Preferably, a dispensing tube is used. For pressure dispensing systems using an external source of pressurized gas, a second, gas opening 15B should be provided, preferably on the closure (8), to bring said source of pressurized gas in fluid communication with the interface (2C) between inner and outer layers (2A, 2B) via a vent 4.

In a particular embodiment of the present invention the preform, as illustrated in Figure 1(b), comprises a gap (1 C) containing air separating the inner and outer layers (1B) and (1A) over a substantial area of the preform's body and wherein said gap is in fluid communication with at least one interface vent (4). With such preform, the blow-moulding process advantageously comprises the following steps:
- in a first stage, a gas is blown into the space defined by the inner layer (1 B) to stretch the preform, whilst the air in the gap separating the preform inner and outer layers (1B) and (1A) is prevented from being evacuated by closing said at least one preform interface vent (4) with a valve located in the fixing means; and
- in a second stage, when the air pressure building up in said gap reaches a preset value, the valve opens thus allowing evacuation of the air enclosed in the gap.

By this method, the inner layer (1 B) is prevented from entering into contact with the outer layer (1A) by the air cushion enclosed within the gap separating the two layers when their respective temperatures are the highest. As stretching proceeds, the gap becomes thinner and air pressure within the gap increases. When the pressure reaches a preset value, the valve closing the vent opening releases, the air is ejected, and the inner layer (1B) is permitted to contact the outer layer (1A) and form an interface therewith at a stage where their respective temperatures have dropped to a level where adhesion between the layers cannot build up to any substantial level.

A release agent may be applied at the interface on either or both surfaces of the inner and outer layers (1 B), (1A) which are to form the interface of the bag-in- container. In the case the outer layer (1A) is injection moulded onto the inner layer (1B), the release agent can be applied at the outer surface of the inner layer (1 B) prior to moulding the outer layer (1A). Any release agents available on the market and best adapted to the material used for the preform and resisting the blowing temperatures, like silicon- or PTFE-based release agents (e.g., Freekote) may be used. The release agent may be applied just prior to loading the preforms into the blowmoulding unit, or the preforms may be supplied pretreated.

The application of a release agent is particularly beneficial with respect to the design of the inner layer (2B). Indeed, lowering the interfacial adhesive strength facilitates delamination of the inner layer (1 B) from the outer layer (1A) and hence reduces stress exerted on the inner layer (1 B) upon delamination, as such the inner layer (1 B) can be designed very thin and flexible without risking that the inner layer (1 B) is damaged upon delamination.

With a preform according to the present invention, however, the amount of release agent to bring the interfacial strength between inner bag (2B) and outer container (2A) is reduced with respect to prior art applications.

Integrally blow-moulded bag-in-containers (2) can be produced according to the present invention from two layer preforms (1) wherein the inner and outer layers are formed of the same polymer or even wherein the inner layer (1B) has a blow-moulding temperature higher than the outer layer (1A). The inner layer releases consistently, repeatedly, and smoothly even in the foregoing layers combinations due to a unique control of the crystallinity of the inner and outer layers (2A, 2B) at their interface (2C).

## Claims

1. A preform (1) for blow-moulding a dispensing bag-in-container (2), said preform comprising an inner layer (1B) and an outer layer (1 A), wherein said preform (1) forms a two layer container (2) upon heating followed by blow-moulding, and wherein the obtained inner layer (2B) of said container releases from the obtained outer layer (2A) upon introduction of a pressurized gas at a point of interface (4) between said two layers; **characterized in that**,
the inner layer (1 B) includes at least one additive in a concentration allowing heating the inner layer (1 B) at a higher rate, dTᵢₙ / dt, than the outer layer (1 A), dTₒᵤₜ / dt, upon heating the preform in a radiation oven emitting in a given radiation wavelength spectrum.

2. A preform according to claim 1, wherein the type and amount of additives in at least the inner layer (1 B) of said preform are such as to allow both the inner layer (1 B) and the outer layer (1A) to reach their desired blow-moulding temperatures, T_{bm,in} and T_{bm,out}, substantially simultaneously upon heating the preform in said radiation oven.

3. The preform according to claim 1 or 2, wherein the inner layer (1 B) and outer layer (1A) comprise the same polymer material or, alternatively, wherein the inner layer (1 B) has a blow-moulding temperature higher than the outer layer (1A).

4. The preform according to any of claims 1 to 3, wherein the inner layer (1 B) and outer layer (1A) each comprises a semicrystalline material, preferably selected from PET, PEN, PTT, PA, PP, PE, HDPE, EVOH, PGAc, PLA, and copolymers thereof.

5. The preform according to any of the preceding claims, wherein the at least one additive is selected from the group of energy absorbing additives and colorants **characterized by** an absorption spectrum having peaks in the wavelength range.comprised between 700 and 20,000 nm, preferably, between 1,000 and 15,000 nm, more preferably between 5,000 and 12,000 nm, most prefetably between.6,000 and 10,000 nm

6. The preform according to the preceding claim, wherein the energy absorbing additive is a member being selected from the group of carbon black, graphite, diamond dust, diazonium salts, sulphonium salts, sulphoxonium salts, iodonium salts, and metal powder such as aluminium, vanadium, titanium.

7. A process for producing a dispensing bag-in-container comprising the following steps:
• providing a radiation oven emitting radiation in a given wavelength spectrum;
• providing a preform (1) having an inner layer (1B) and an outer layer (1 A) wherein said preform forms a two layer container (2) upon blow-moulding, and wherein the obtained inner layer (2B) of said container releases from the obtained outer layer (2A) upon introduction of a gas at a point of interface between said two layers, wherein the inner layer (1B) of the preform includes at least one additive allowing heating the inner layer (1B) at a higher rate, dTᵢₙ / dt, than the outer layer (1 A), dTₒᵤₜ / dt, upon irradiating the preform in said radiation oven;
• heating the inner and outer layers (1 B, 1A) of said preform to their respective blow-moulding temperatures, T_{bm,in}, T_{bmout}, in said radiation oven;
• transferring the thus heated preform to a blowmoulding tool,
• blow-moulding the thus heated preform to form a bag-in-container (2).

8. The process according to the preceding claim, wherein a preform according to any of claims 1 to 6 is used.

9. The process according to the preceding claim, wherein both the inner layer (1 B) and the outer layer (1A) reach their desired blow-moulding temperatures, T_{bm,in}, T_{bm,out}, substantially simultaneously upon heating the preform in said radiation oven.

10. The process according to any of claims 7 to 9 wherein the blowmoulding temperature, T_{bm,in}, of the inner layer (1 B) is higher than the one, T_{bm,out}, of the outer layer (1B).

11. The process according to any of claims 7 to 10, wherein the radiation oven is an infrared oven emitting radiations at least in a wavelength range.comprised between 700 and 20,000 nm, preferably, between 1,000 and 15,000 nm, more preferably between 5,000 and 12,000 nm, most prefetably between.6,000 and 10,000 nm.

12. A bag-in-container made by a process according to any of claims 7 to 11.
